# EUROPÄISCHE PATENTSCHRIFT

(11) **EP 3 812 636 B1**
(45) Veröffentlichungstag und Bekanntmachung des Hinweises auf die Patenterteilung: **07.06.2023**
(21) Anmeldenummer: 20203937.6
(22) Anmeldetag: 26.10.2020
(51) Int. Cl.: F16L 27/111, F16L 51/02

(54) **LEITUNGSKOMPENSATOR**
PIPE COMPENSATOR
COMPENSATEUR DE LIGNE

(30) Priorität: 24.10.2019 DE 102019128740
(43) Veröffentlichungstag der Anmeldung: 28.04.2021
(73) Patentinhaber: KRONES AG, 93073 Neutraubling (DE)
(72) Erfinder: Leidel, Marco, 93073 Neutraubling (DE); Kolter, Nick, 93073 Neutraubling (DE)
(74) Vertreter: Nordmeyer, Philipp Werner

(56) Entgegenhaltungen:
- EP-A1- 1 156 257
- EP-A1- 3 409 994
- DE-T2- 69 810 346

## Beschreibung

### Technisches Gebiet

Die vorliegende Erfindung betrifft einen Leitungskompensator zum Verbinden zweier Leitungsenden, mittels welchem beispielsweise eine Längenausdehnung, eine Winkelabweichung, ein Versatz oder auch Fertigungstoleranzen zwischen den beiden Leitungsenden kompensiert werden kann. Der vorgeschlagene Leitungskompensator kann beispielsweise in Getränkeabfüllmaschinen eingesetzt werden, um Leitungsteile miteinander zu verbinden, beispielsweise Leitungsenden von Füllproduktzuleitungen. Der vorgeschlagene Leitungskompensator eignet sich besonders gut für den Einsatz bei der aseptischen Abfüllung von Getränken.

### Stand der Technik

Aus dem Stand der Technik sind Leitungskompensatoren zur Verbindung zweier Leitungsenden bekannt, welche beispielsweise in Form von faltenbalgförmig ausgebildeten Leitungsteilen vorgesehen sind, welche sowohl eine axiale Längenkompensation vornehmen können, als auch einen Versatz und Toleranzen zwischen zwei Leitungsenden ausgleichen können.

Weiterhin bekannt sind konstruktiv ausgebildete Leitungskompensatoren, beispielsweise in Schleifenform, in L-Form oder in beliebigen weiteren, geschwungenen oder schlaufenförmigen Formen ausgeführte Leitungsabschnitte, welche durch senkrecht auf die jeweilige Leitungsachse auftreffenden Kräfte verbogen werden, um auf diese Weise eine Kompensation einer Längenausdehnung, eines Versatzes oder von Fertigungstoleranzen bereitzustellen.

Bei der Verwendung von gebogenen oder schlaufenförmigen Rohrleitungen, die zur Kompensation von Längenausdehnung verwendet werden, kommt es dennoch zu einer hohen Kraftübertragung auf das gesamte Rohrleitungssystem, sodass hieraus Maschinenschäden resultieren können.

Weiterhin bergen schleifenförmige oder faltenbalgförmige Leitungskompensatoren die Gefahr, dass jeweils in den schlaufenförmigen Bereichen beziehungsweise in den Falten des Faltenbalgs nach dem eigentlichen Abfließen der Flüssigkeit noch Flüssigkeitsreste verbleiben und entsprechend der Leitungskompensator nicht selbstständig leerlaufend ist. Hierdurch wird die Reinigung dieser Leitungsbereiche erschwert. Besonders stellt die Verwendung von faltenbalgförmigen Leitungskompensatoren im Bereich der aseptischen Abfüllung von Getränken besondere Herausforderungen an die Reinigung und Sterilisierung der füllproduktberührten Bereiche.

Weiterhin kann es durch den Einsatz von faltenbalgförmigen Leitungskompensatoren zu Aromaverschleppungen kommen - insbesondere weil Aromen in das Material der flexiblen Bereiche eines solchen faltenbalgförmigen Leitungskompensators herein diffundieren können.

Die EP 1 156 257 A1 beschreibt eine Vorrichtung mit Faltenbalg, der im Innern mit einer zylindrischen Lage ausgekleidet ist. Die DE 698 10 346 T2 beschreibt einen Faltenbalg, bei dem die Falten abschnittsweise eingeebnet sind.

### Darstellung der Erfindung

Ausgehend von dem bekannten Stand der Technik ist es eine Aufgabe der vorliegenden Erfindung, einen verbesserten Leitungskompensator anzugeben, mittels welchem zwei Leitungsenden miteinander verbunden werden können.

Diese Aufgabe wird durch einen Leitungskompensator zum Verbinden zweier Leitungsenden, bevorzugt in einer Getränkeabfüllanlage, gelöst, mit den Merkmalen des Anspruchs 1. Vorteilhafte Weiterbildungen ergeben sich aus der vorliegenden Beschreibung, den beigefügten Zeichnungen sowie den Unteransprüchen.

Entsprechend wird ein Leitungskompensator zum Verbinden zweier Leitungsenden, bevorzugt in einer Getränkeabfüllanlage, vorgeschlagen, umfassend einen ersten Anschlussabschnitt, einen zweiten Anschlussabschnitt und einen zwischen dem ersten Anschlussabschnitt und dem zweiten Anschlussabschnitt liegenden Faltenbalg. Erfindungsgemäß ist der Faltenbalg leerlaufend ausgebildet. Dadurch, dass ein Faltenbalg in einem Leitungskompensator verwendet wird, kann erreicht werden, dass zum einen eine flexible Kompensation von Längenänderungen, Versätzen oder Winkelfehlern zwischen den Leitungsenden erreicht werden kann, wobei aufgrund der Ausgestaltung des Leitungskompensators als Faltenbalg die Übertragung von Kräften auf das übrige Rohrleitungssystem gegenüber einem schleifenförmigen Leitungskompensator reduziert ist.

Weiterhin wird über die Ausgestaltung des Faltenbalgs dergestalt, dass er leerlaufend ausgebildet ist, eine vereinfachte Reinigung, Desinfektion oder Sterilisierung, insbesondere in einer Getränkeabfüllanlage, ermöglicht. Weiterhin wird aufgrund der leerlaufenden Ausbildung des Faltenbalgs erreicht, dass eine Aromaverschleppung zwischen unterschiedlichen Füllprodukten reduziert wird beziehungsweise vollständig vermieden wird.

Unter leerlaufend wird verstanden, dass in dem Leitungskompensator keine Flüssigkeiten verbleiben, wenn die übrige Verrohrung entleert ist. Mit anderen Worten kann die Flüssigkeit aus dem Leitungskompensator selbstständig durch die Gravitation herausfließen, ohne dass in dem Faltenbalg Flüssigkeit beispielsweise in Vertiefungen oder Hinterschneidungen verbleibt.

Die Falten des Faltenbalgs sind im Bereich eines Leitungsbodens mit Materialverstärkungen aufgefüllt, um einen ebenen Leitungsboden auszubilden. Damit können die im Innenraum des Faltenbalgs üblicher Weise vorliegenden Vertiefungen im Bodenbereich so ausgefüllt sein, dass ein in Fließrichtung ebener Fließgrund bereitgestellt wird. Auf diese Weise kann erreicht werden, dass der Leitungskompensator im Bereich des Bodens keine Spalten, Vertiefungen oder Toträume aufweist, sodass entsprechend durch die Ausbildung der Auffüllung der Vertiefungen im Bodenbereich mit den Materialverstärkungen der Leitungskompensator leerlaufend ausgebildet wird.

Alternativ oder zusätzlich sind die Falten des Faltenbalgs im Bereich eines Leitungsdachs mit Materialverstärkungen aufgefüllt, um ein ebenes Leitungsdach auszubilden, wobei das Leitungsdach bevorzugt dem Leitungsboden gegenüberliegend ausgebildet ist. Durch die Auffüllung der Vertiefungen auf der dem Leitungsboden gegenüberliegenden, obere Seite können sowohl im unteren Bereich des Leitungskompensators als auch im gegenüberliegenden oberen Bereich des Leitungskompensators die jeweiligen Vertiefungen des Faltenbalgs mit Material ausgefüllt sein.

Hierdurch ergibt sich eine Abstützung derart, dass der auf diese Weise durch die Materialverstärkungen entstehende obere und untere Steg das Durchhängen des Leitungskompensators zu seiner Mitte hin reduziert beziehungsweise ganz verhindert. Entsprechend wird auch auf diese Weise der Faltenbalg leerlaufend ausgebildet, da aufgrund der erhöhten Steifigkeit des Leitungskompensators gegen eine Auslenkung nach oben und unten das Entstehen eines sackförmigen Bereichs im Leitungskompensator, also eines Durchhängen des Leitungskompensators zur Mitte hin, vermieden werden kann beziehungsweise zumindest soweit reduziert werden kann, dass immer noch ein vollständiges Leerlaufen des Faltenbalg erreicht werden kann.

Durch die Ausbildung des Steges aus den Materialverstärkungen oben und unten in den jeweiligen Vertiefungen des Faltenbalgs wird der Leitungskompensator in einer Richtung senkrecht zu der durch den oberen und unteren Steg definierten Ebene liegenden Bewegungsrichtung weniger steif, sodass entsprechend eine seitliche Beweglichkeit erreicht werden kann, welche ein Verbinden von zwei Leitungsenden, welche einen gewissen Versatz aufweisen, begünstigt, wobei gleichzeitig das Durchhängen beziehungsweise eine Sackbildung des Leitungskompensators reduziert beziehungsweise vermieden wird.

Bevorzugt weist der Faltenbalg einen ovalen Querschnitt auf. Durch die Ausprägung des Querschnitts kann ebenfalls eine erhöhte Steifigkeit in einer in der Einbaulage vertikal ausgerichteten Ebene erreicht werden, wohingegen in einer Richtung senkrecht zu dieser Ebene eine reduzierte Steifigkeit erreicht wird. Auch durch das Ausbilden des Faltenbalgs mit einem ovalen Querschnitt kann entsprechend ein Leerlaufen des Faltenbalgs unterstützt werden, da durch diese Form die Ausbildung eines Sacks beziehungsweise des Durchhängens des Leitungskompensators zur Mitte hin reduziert werden kann beziehungsweise vollständig vermieden werden kann.

Mit anderen Worten kann durch die Wahl des Querschnitts des Faltenbalgs die Biegesteifigkeit in der gewünschten Richtung erhöht werden, nämlich in der Richtung, in welcher der Leitungskompensator in seiner Einbaulage daran gehindert wird, durchzuhängen beziehungsweise eine sackförmige Ausbildung ausbilden, und zum anderen die Biegesteifigkeit in einer zu dieser Ebene senkrechten Richtung zu reduzieren, um beispielsweise zum Ausgleich von Toleranzen bei der Montage der beiden Leitungsenden zu dienen.

Bevorzugt sind die Falten des Faltenbalgs im Bereich der Materialverstärkungen auf der Außenseite zur Ausbildung von Abflachungen abgeflacht. Zur Reduktion einer zu hohen Versteifung können die Falten des Faltenbalgs auf der Außenseite derjenigen Bereiche, welche auf der Innenseite mit Materialverstärkungen aufgefüllt sind beziehungsweise in denen die Vertiefungen des Faltenbalgs mit Material aufgefüllt sind, von außen abgeflacht.

Die Abflachungen können auch dazu dienen, die Orientierung des Leitungskompensators für einen Monteur klar zu machen, um einen lagerichtigen Einbau zu erreichen.

Bevorzugt sind die Falten des Faltenbalgs in einer Seitenwand materialverstärkungsfrei ausgebildet.

Auf diese Weise kann die seitliche Beweglichkeit des Faltenbalges und damit die Kompensationswirkung des Leitungskompensators verbessert werden. Mit anderen Worten wird die Biegesteifigkeit in einer in der Einbaulage horizontalen Ebene reduziert, wohingegen sie in einer in Einbaulage vertikalen Ebene bevorzugt höher ist, um ein Durchhängen zu reduzieren oder zu vermeiden.

Bevorzugt weist der erste Anschlussabschnitt und/oder der zweite Leitungsabschnitt einen Innendurchmesser auf, welcher kleiner ist, als der Innendurchmesser des Faltenbalgs. Durch die Erweiterung des Innendurchmessers des Faltenbalgs ausgehend von dem Anschlussabschnitt kann eine Strömungsberuhigung erreicht werden. Dadurch kann erreicht werden, dass eine etwas turbulente Strömung, die in den Faltenbalg einströmt, durch die Erweiterung des Innendurchmessers beruhigt wird und den Leitungskompensator laminarer verlässt, als sie in diesen eingeflossen ist.

Die laminare Ausrichtung des Mediums kann auch durch die Innengeometrie des Kompensators beeinflusst werden, beispielsweise durch den Einsatz eines (Strömungs-) Gleichrichters in dem Faltenbalg und/oder im Bereich eines der Anschlussabschnitte, wobei der Gleichrichter bevorzugt in Form einer Lochscheibe und/oder einer Spirale vorgesehen ist. Auf diese Weise kann weiterhin eine einfache Einstellung beziehungsweise Anbindung an die miteinander zu verbindenden Leitungsenden vorgenommen werden, indem die entsprechenden Anschlussabschnitte in ihrem Innendurchmesser an die zu verbindenden Leitungsenden angepasst werden. Gleichzeitig kann im Bereich des Faltenbalgs der Fließwiderstand aufgrund eines höheren Querschnittes gleich oder geringer sein, als im Bereich der Anschlussabschnitte.

Bevorzugt sind der erste Anschlussabschnitt und der zweite Anschlussabschnitt konzentrisch zueinander angeordnet. Auf diese Weise kann der Einbau des Leitungskompensators in die Verrohrung und zwischen die beiden Leitungsenden vereinfacht werden. Weiterhin verbessern sich die Strömungseigenschaften in dem Leitungskompensator, da keine Umlenkung der Strömung erforderlich ist.

Gemäß der Erfindung ist die Längsachse der Anschlussabschnitte von der Längsachse des Faltenbalgs beabstandet, wobei die Längsachse der Anschlussabschnitte von der Längsachse des Faltenbalgs bevorzugt um die Differenz des Innendurchmessers des Faltenbalgs und des Innendurchmessers der Anschlussabschnitte beabstandet ist. Auf diese Weise kann ein ebener Leitungsboden ausgebildet werden. Die unterschiedlichen Innendurchmesser der Anschlussabschnitte und des Faltenbalgs werden durch die Verschiebung der Längsachsen zueinander so ausgerichtet, dass im Bereich des Leitungsbodens eine durchgehende Fläche ausgebildet werden kann.

Mit anderen Worten ist der Faltenbalg im Wesentlichen exzentrisch zu den Anschlussabschnitten so angeordnet, dass die Innenwand des Anschlussabschnitts durchgehend mit dem Leitungsboden des Faltenbalgs angeordnet ist, um auf diese Weise ein Leerlaufen des Faltenbalgs zu unterstützen. Mit anderen Worten wird, obwohl die Anschlussabschnitte einen geringeren Innendurchmesser aufweisen als der Faltenbalg, dennoch das Entstehen von Vertiefungen oder Toträumen in dem Leitungskompensator dadurch vermieden, dass mittels der Anordnung der Anschlussabschnitte ein durchgehender, ebener Leitungsboden zwischen dem Anfang des ersten Anschlussabschnitts über den mit den ausgefüllten Vertiefungen in seinem Leitungsboden versehenen Faltenbalg hin zum daran anschließenden Anschlussabschnitt gleichförmig und eben ausgebildet ist.

Bevorzugt ist ein Leitungsboden von einem Anbindungsabschnitt durch den Faltenbalg hindurch zu dem weiteren Anbindungsabschnitt durchgehend eben ausgebildet. Auf diese Weise kann der gesamte Leitungskompensator leerlaufend ausgebildet sein.

Bevorzugt weist der Leitungsboden in der Längsrichtung betrachtet eine V-Form auf. Durch die Ausbildung mit einer V-Form kann eine Rinne bereitgestellt werden, mittels welcher ein definierter Abfluss für Flüssigkeiten bereitgestellt werden kann, um auf diese Weise ein vollständiges Abfließen von Flüssigkeiten zu erreichen. Dies ist insbesondere von Bedeutung, wenn das Material des Leitungskompensators und die Flüssigkeit durch eine entsprechende Oberflächenspannung zur Ausbildung von Tropfen neigen, da durch die Rinne ein Zusammenführen von Restflüssigkeiten erreicht wird.

Bevorzugt sind die Anschlussabschnitte mit dem Faltenbalg und den Materialverstärkungen einstückig ausgebildet. Auf diese Weise lässt sich der Leitungskompensator hygienisch einwandfrei herstellen, da sich Hinterschnitte nicht ausbilden.

Bevorzugt weist mindestens ein Anschlussabschnitt einen Flansch auf, um auf diese Weise eine einfache Anbindung an die Verrohrung zu ermöglichen.

In einer weiteren Ausgestaltung kann mindestens ein Anschlussabschnitt eine Clampverbindung oder eine Klemmverbindung aufweisen, um auf diese Weise eine einfache Verbindung des Leitungskompensators mit einem der Leitungsabschnitte zu ermöglichen.

Mindestens ein Anschlussabschnitt kann auch an ein Leitungsende anschweißbar sein und aus einem entsprechenden Material ausgebildet sein und/oder eine zum Verschweißen geeignete Geometrie aufweisen.

Bevorzugt weist der Faltenbalg in einer in Einbaulage horizontalen Ebene eine geringere Biegesteifigkeit auf, als in einer vertikalen Ebene. Auf diese Weise kann eine Durchbiegung des Leitungskompensators im Betrieb nach unten hin und damit die Ausbildung einer sackförmigen Struktur reduziert oder vermieden werden, um den leerlaufenden Charakter des Faltenbalgs und des Leitungskompensators auf diese Weise nicht zu beeinträchtigen.

Durch den entsprechenden Aufbau des Leitungskompensators wird unter anderem eine laterale und angulare Beweglichkeit des Leitungskompensators insbesondere im Bereich des Faltenbalgs erreicht. Bei der Ausbildung des Faltenbalgs in einer entsprechenden Länge, welche auch eine S-förmige Verbiegung ermöglicht, ist gleichzeitig auch eine axiale Kompensationsmöglichkeit gegeben.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine schematische Draufsicht auf einen Leitungskompensator,
- Figur 2: einen Längsschnitt durch den Leitungskompensator in der Schnittebene A-A aus Figur 1,
- Figur 3: einen Querschnitt durch den Leitungskompensator in der Schnittebene C-C aus Figur 1,
- Figur 4: einen Querschnitt durch den Leitungskompensator in der Schnittebene B-B aus Figur 1, und
- Figur 5: eine schematische perspektivische Darstellung des Leitungskompensators.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

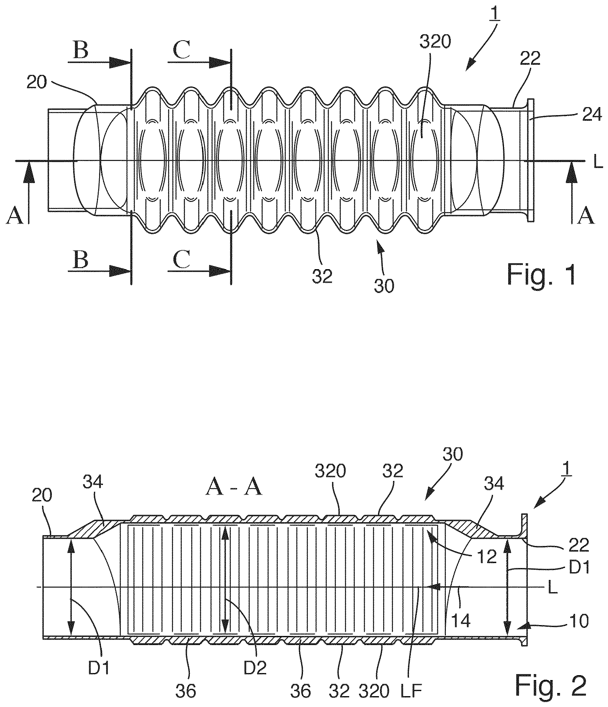

In Figur 1 ist in einer schematischen Draufsicht ein Leitungskompensator 1 gezeigt, welcher einen ersten Anschlussabschnitt 20 und einen zweiten Anschlussabschnitt 22 aufweist, wobei zwischen dem ersten Anschlussabschnitt 20 und dem zweiten Anschlussabschnitt 22 ein Faltenbalg 30 vorgesehen ist.

Mittels der Anschlussabschnitte 20, 22 kann der Leitungskompensator 1 in eine Verrohrung eingesetzt werden und konkret zwischen zwei Leitungsenden der Verrohrung eingesetzt werden, um die Leitungsenden unter Ausnutzung der Eigenschaften des Leitungskompensators 1 miteinander zu verbinden.

Der zweite Anschlussabschnitt 22 weist in dem gezeigten Ausführungsbeispiel einen Flansch 24 auf, an welchem ein Leitungsende, beispielsweise einer Verrohrung in einer Getränkeabfüllanlage, in bekannter Weise anbindbar ist.

Am ersten Anschlussabschnitt 20 ist in dem gezeigten Ausführungsbeispiel kein Flansch vorgesehen, hier findet beispielsweise ein Einstecken in ein Leitungsende der Verrohrung der Getränkeabfüllanlage statt.

Beide Anschlussabschnitte 20 und 22 können in einer besonders bevorzugten Ausgestaltung identisch ausgeführt sein. Auf diese Weise wird der Einbau vereinfacht.

Der Leitungskompensator 1 erstreckt sich in einer Längsrichtung L, welche auch der Fließrichtung eines den Leitungskompensator 1 durchfließenden Fluids entspricht. Das Fluid fließt dann entsprechend von einem Leitungsende der Verrohrung zu dem anderen Leitungsende der Verrohrung.

In den Figuren fällt die Längsrichtung L mit einer Längsachse der Anschlussabschnitte 20, 22 zusammen.

Der Faltenbalg 30 weist eine Längsachse LF auf, die nicht mit der Längsachse L der Anschlussabschnitte 20, 22 zusammenfällt.

Entsprechend kann mittels des Leitungskompensators 1 eine Verbindung zwischen zwei Leitungsenden einer Verrohrung beispielsweise in einer Getränkeabfüllanlage vorgenommen werden. Bei der Verrohrung kann es sich beispielsweise um Leitungen einer Getränkeabfüllanlage handeln, welche ein Füllprodukt von einer Füllproduktzufuhr an einen Drehverteiler übergeben, um das Füllprodukt von einem stehenden Teil an einen rotierenden Teil eines Rotationsfüllers zu übergeben. Der Leitungskompensator 1 kann aber auch in anderen Bereichen der Verrohrung angeordnet werden und/oder zur Verbindung von Leitungsenden einer andere Fluide transportierenden Verrohrung eingebunden werden, beispielsweise in einer eine Reinigungsflüssigkeit transportierende Verrohrung.

Mittels des Leitungskompensators 1 können in einem gewissen Maße laterale (seitliche) und angulare (Winkel-) Abweichungen zwischen den beiden Leitungsenden ausgeglichen werden. Weiterhin können in einem gewissen Maße axiale Verschiebungen, Versätze und Toleranzen zwischen den Leitungsenden kompensiert werden. Solche lateralen und angularen Abweichungen, axiale Verschiebungen und Versätze der Leitungsenden in der Getränkeabfüllanlage können beispielsweise durch Längenausdehnungen der Verrohrung hervorgerufen werden, welche beispielsweise durch Temperaturänderungen in der Getränkeabfüllanlage hervorgerufen werden, welche ihrerseits Materialdehnungen hervorrufen. Solche Temperaturänderungen treten besonders stark in Getränkeabfüllanlagen auf, bei welchen Füllprodukte kalt oder heiß gegenüber der Umgebungstemperatur abgefüllt werden. Weiterhin treten solche Temperaturänderungen auch während einer Reinigung, einer Desinfizierung oder einer Sterilisierung der Anlage auf, bei welchen hohe Temperaturen erreicht werden können. Die Verrohrung in Getränkeabfüllanlagen ist üblicherweise mittels Edelstahlrohren ausgebildet, welche eine entsprechend deutliche Wärmeausdehnung aufweisen.

Der Faltenbalg 30 weist Falten 32 auf, durch welche der Faltenbalg 30 einen Bereich aufweist, der eine gegenüber den Anschlussabschnitten 20, 22 geringere axiale und laterale Steifigkeit aufweist. Die Funktion eines herkömmlichen Faltenbalgs ist prinzipiell bekannt.

In der in Figur 2 gezeigten Schnittdarstellung ist zu erkennen, dass im Bereich der Falten 32 des Faltenbalgs 30 in einem Leitungsboden 10, welcher in Einbaulage in Gravitationsrichtung nach unten zeigt, die durch die einzelnen Falten 32 bereitgestellten Vertiefungen mit Materialversteifungen 36 so ausgefüllt sind, dass entsprechend ein durchgehend ebener Leitungsboden 10 entsteht. Durch diese Ausbildung des durchgehenden ebenen Leitungsbodens 10 kann sichergestellt werden, dass der Leitungskompensator 1 leerlaufend ausgebildet ist.

In dem Querschnitt der Figur 2 ist entsprechend zu erkennen, dass der Leitungskompensator 1 leerlaufend ausgebildet ist. Mit anderen Worten liegen am Leitungsboden 10, welcher in Gravitationsrichtung beim Einbau entsprechend nach unten zeigt und in welchem Restmengen des den Leitungskompensator 1 durchfließenden Fluids verbleiben könnten, keinerlei Toträume, Hinterschnitte oder Vertiefungen vor, in welchen Flüssigkeit stehen bleiben könnte.

Vielmehr ist der Leitungsboden 10 in seinem tiefsten Bereich, durch welchen hindurch die in Figur 2 gezeigte Schnittebene gelegt ist, in der Längsrichtung L vollständig eben und gerade ausgebildet, sodass Flüssigkeiten von dem ersten Anschlussabschnitt 20 zum zweiten Anschlussabschnitt 22 fließen können und dabei Flüssigkeit weder im Faltenbalg 30 noch in den übrigen Bereichen des Leitungskompensators 30 stehen bleiben kann.

Die nach außen gestülpten, aber mit dem Material aufgefüllten Falten 32 können auf der Außenseite so bearbeitet werden, dass sich an jeder Falte 32 eine Abflachung 320 ergibt.

Auch im Bereich des dem Leitungsboden 10 gegenüberliegenden Leitungsdaches 12 wird eine solche Auffüllung der Falten 32 des Faltenbalgs 30 vorgenommen. Damit wird im Innenraum des Faltenbalgs 30 am Leitungsboden 10 und am Leitungsdach 12 - jeweils in der Einbaulage betrachtet - eine durchgehend ebene Struktur ausgebildet.

Durch die Ausfüllung der Falten 32 des Faltenbalgs 30 mit Material wird zusätzlich eine Versteifung des Faltenbalgs 30 im Bereich des Leitungsbodens 10 und im Bereich des Leitungsdachs 12 erreicht. Diese Versteifung findet in der in Figur 2 gezeigten Ebene statt, sodass der Leitungskompensator 1 durch die ausgefüllten Bereiche im Bereich des Leitungsbodens 10 und des Leitungsdaches 12 entsprechend abgestützt wird. Auf diese Weise kann ein Durchhängen des Leitungskompensators 1 reduziert werden beziehungsweise vollständig vermieden werden, so dass hier auch im Betrieb bei Belastung der Leitungsboden 10 weiterhin gerade ausgebildet verbleibt.

Damit kann das Ausbilden eines tiefsten Bereiches beziehungsweise eine "Sackbildung" im Leitungsboden 10 vermieden werden und der leerlaufende Charakter des Leitungskompensators 1 wird dadurch weiter unterstützt.

Die zu der in Figur 2 gezeigten Schnittebene senkrecht angeordneten Seitenwände 14 der Falten 32 des Faltenbalgs 30 sind nicht mit zusätzlichem Material verfüllt, sondern weisen die übliche Struktur eines Faltenbalgs auf. Der Faltenbalg 30 hat damit in den Seitenwänden 14 auch die für einen Faltenbalg üblichen Eigenschaften. Insbesondere sorgen die in der üblichen Struktur ausgebildeten Seitenwände 14 dafür, dass der Leitungskompensator 1 zur Seite hin gebogen werden kann.

Konkret weist der Leitungskompensator 1 in der Einbaulage seitlich eine geringere Biegesteifigkeit auf, als in den senkrecht dazu stehenden Bereichen. Damit ist eine seitliche Auslenkung des Leitungskompensators 1 einfacher möglich, als eine Auslenkung nach oben oder nach unten - jeweils auf die Einbaulage bezogen.

Entsprechend findet eine Durchhängung des Leitungskompensators 1 kaum statt, wohingegen jedoch eine seitliche Auslenkung des Leitungskompensators 1 einfach stattfinden kann, sodass laterale und angulare Verschiebungen zwischen den Leitungsenden kompensiert werden können und - durch eine beispielsweise S-förmige Auslenkung des Leitungskompensators 1 in seitlicher Richtung - gleichzeitig auch eine axiale Längenverschiebung zwischen den Leitungsenden kompensiert werden kann.

Damit weist der Leitungskompensator 1 eine höhere Biegesteifigkeit in der den Leitungsboden 10 und das Leitungsdach 12 schneidenden Ebene (entsprechend der Schnittebene A-A aus Figur 1) auf, als in der senkrecht dazu angeordneten Ebene, welche die Seitenwände 14 schneidet.

Durch die Ausfüllungen der Falten 32 im Leitungsboden 10 und im Leitungsdach 12 findet zusätzlich zu der Erhöhung der Biegesteifigkeit des Leitungskompensators 1 gegen das Durchhängen auch eine Versteifung in Längsrichtung L des Leitungskompensators 1 statt. Auch hierin unterscheidet sich der vorgeschlagene Leitungskompensator 1 von herkömmlichen Faltenbalgen. Durch die Versteifung in der Längsrichtung L kann der Leitungskompensator 1 axiale Verschiebungen durch Stauchung nicht in dem Maße kompensieren, wie dies bei einem herkömmlichen Faltenbalg der Fall ist. Eine ausreichende Kompensation axialer Verschiebungen kann aber durch ein S-förmiges Ausweichen des Leitungskompensators 1 erreicht werden, so dass sich hieraus keine Einschränkungen ergeben, der vorgeschlagene Leitungskompensator 1 aber gleichzeitig immer noch leerlaufend ausgebildet ist.

Im Bereich des Leitungsbodens 10 kann bevorzugt eine in Längsrichtung L, die auch einer Strömungsrichtung eines den Leitungskompensator 1 durchfließenden Fluids entspricht, eine V-förmig ausgebildete Rinne vorgesehen sein, welche eine tiefste Spur aufweist, welche mit der Schnittebene A-A aus der Figur 1 zusammenfällt. Durch die Rinnenform kann erreicht werden, dass sich restliche Flüssigkeit in der Rinne sammelt und entsprechend abfließt, um so den leerlaufenden Charakter des Leitungskompensators 1 weiter zu unterstützen.

Diese tiefste Spur ist in Längsrichtung L vollständig gerade und eben ausgeführt, so dass der Leitungskompensator 1 leerlaufend ausgebildet ist und im Leitungskompensator 1 vorliegendes Fluid aus dem Leitungskompensator 1 vollständig herausfließen kann.

Der erste Anschlussabschnitt 20 und der zweite Anschlussabschnitt 22 weisen jeweils einen Innendurchmesser D1 auf und der Faltenbalg 30 weist einen Innendurchmesser D2 auf, wobei der Innendurchmesser des Faltenbalgs 30 hier als der Innendurchmesser definiert ist, welcher im Innenraum den am weitesten nach innen gerichteten Oberflächen der Falten 32 des Faltenbalgs 30 entspricht. Entsprechend ist der Innendurchmesser D2 des Faltenbalgs 30 der geringste Innendurchmesser, der im Faltenbalg 30 vorliegt und der entsprechend auch den Strömungswiderstand eines den Faltenbalg 30 durchströmenden Fluids beeinflusst.

Der Innendurchmesser D1 des ersten und des zweiten Anschlussabschnittes 20, 22 ist kleiner, als der Innendurchmesser D2 des Faltenbalgs 30. Damit kann über die Einstellung des Innendurchmessers D1 des ersten und zweiten Anschlussabschnittes 20, 22 eine Anpassung der Geometrie an die jeweiligen Leitungsenden der Getränkeabfüllanlage vorgenommen werden.

Die Aufweitung des Innendurchmessers D1 von dem ersten Anschlussabschnitt 20 auf den Innendurchmesser D2 des Faltenbalgs 30 und die erneute Verjüngung auf den Innendurchmesser D1 des zweiten Anschlussabschnittes 22 ermöglicht es auch, innerhalb des Faltenbalgs 30 eine Strömungsausrichtung zu erreichen, sodass eine vormals leicht turbulente Strömung nach dem Durchlaufen des Leitungskompensators 1 weniger turbulent ist beziehungsweise laminar ausgebildet sein kann.

In dem gezeigten Ausführungsbeispiel ist der Übergangsbereich 34 zwischen dem ersten Anschlussabschnitt 20 und dem Faltenbalg 30 beziehungsweise dem Faltenbalg 30 und dem zweiten Anschlussabschnitt 22 unter einem Winkel von vorzugsweise 60° ausgeführt. Durch diese Ausgestaltung kann die Strömungsausrichtung gefördert werden. Es können jedoch auch andere Winkel vorgesehen sein, beispielsweise Winkel zwischen 40° und 80°.

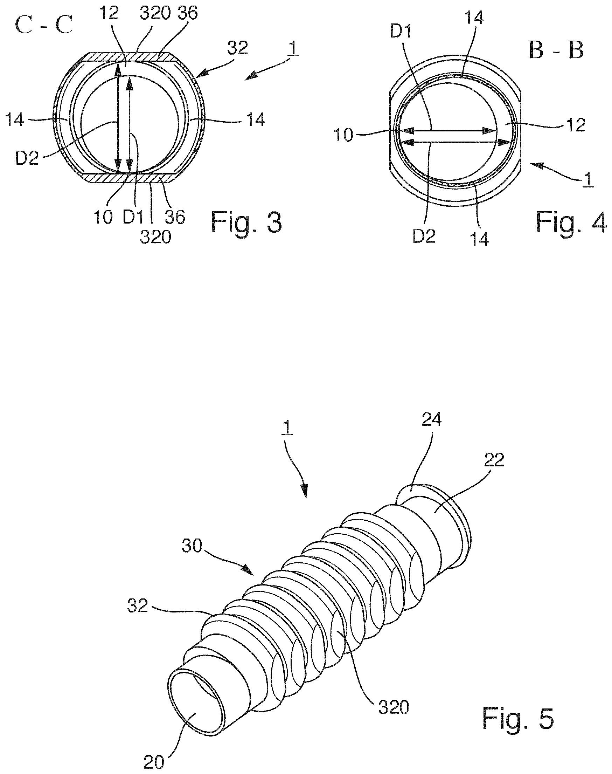

Aus der in Figur 2 gezeigten Schnittdarstellung genauso wie durch die Querschnitte in Figur 3 und Figur 4 gezeigt, ergibt sich, dass der erste Anschlussabschnitt 20 und der zweite Anschlussabschnitt 22 jeweils koaxial zueinander ausgebildet sind. Der Faltenbalg 30 hingegen ist nicht koaxial zu den ersten und zweiten Anschlussabschnitten 20, 22 ausgeführt, sondern so, dass der Leitungsboden 10 vom ersten Anschlussabschnitt 20 in den Faltenbalg 30 hinein und dann zum zweiten Anschlussabschnitt 22 hin in der Längsrichtung L vollkommen eben und gerade ausgebildet ist - jeweils bezogen auf die Einbaulage.

Der Faltenbalg 30 gegenüber dem ersten Anschlussabschnitt 20 und dem zweiten Anschlussabschnitt 22 um die Differenz des Innendurchmessers, also D2 - D1, nach oben hin verschoben - wiederum betrachtet bezüglich der Einbaulage des Leitungskompensators 1.

Mit anderen Worten fallen die Längsachse L der Anschlussabschnitte 20, 22 und die Längsachse LF des Faltenbalgs 30 auseinander und sind um die Differenz der Innendurchmesser, also D2-D1, voneinander beabstandet. Die Längsachse L der Anschlussabschnitte 20, 22 liegt damit näher beim Leitungsboden 10, als die Längsachse LF des Faltenbalgs 30.

Hieraus ergibt sich, dass der Leitungskompensator 1 eine vorgegebene Einbaulage aufweist, welche durch den durchgehenden Leitungsboden 10 definiert ist, der in der Einbaulage in Gravitationsrichtung unten angeordnet wird.

In der Figur 3 ist dies noch einmal deutlich gezeigt, wobei hier der Leitungskompensator 1 in einer Querschnittsdarstellung gezeigt ist, welche der Einbaulage entspricht. Die durch die Auffüllung der Falten 32 des Faltenbalgs 30 entstandenen Materialverstärkungen 36 sind in dieser Schnittdarstellung besonders gut zu erkennen. Über diese Materialverstärkungen 36 ergibt sich entsprechend die erhöhte Biegesteifigkeit des Leitungskompensators 1 in einer vertikalen Ebene bezüglich der Einbaulage. Gleichzeitig ist zu erkennen, dass die Materialstärken an den Seitenwänden 16 in der in Figur 3 gezeigten Ausrichtung geringer ist, wodurch entsprechend eine Verbiegung des Leitungskompensators 1 in einer horizontalen Ebene bezüglich der Einbaulage einfacher möglich ist.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Leitungskompensator
- 10: Leitungsboden
- 12: Leitungsdach
- 14: Seitenwand
- 20: Anschlussabschnitt
- 22: Anschlussabschnitt
- 24: Flansch
- 30: Faltenbalg
- 32: Falte
- 34: Übergangsbereich
- 36: Materialverstärkung
- 320: Abflachung

- L: Längsrichtung des Leitungskompensators und Längsachse der Anschlussabschnitte
- LF: Längsachse des Faltenbalgs
- D1: Innendurchmesser der Anschlussabschnitte
- D2: Innendurchmesser des Faltenbalgs

## Patentansprüche

1. Leitungskompensator (1) zum Verbinden zweier Leitungsenden, bevorzugt in einer Getränkeabfüllanlage, umfassend einen ersten Anschlussabschnitt (20), einen zweiten Anschlussabschnitt (22) und einen zwischen dem ersten Anschlussabschnitt (20) und dem zweiten Anschlussabschnitt (22) liegenden Faltenbalg (30), wobei der Faltenbalg (30) leerlaufend ausgebildet ist, indem die Falten (32) des Faltenbalgs (30) im Bereich eines Leitungsbodens (10) mit Materialverstärkungen (36) aufgefüllt sind, um einen ebenen Leitungsboden (10) auszubilden, und/oder die Falten (32) des Faltenbalgs (30) im Bereich eines Leitungsdachs (12) mit Materialverstärkungen (36) aufgefüllt sind, um ein ebenes Leitungsdach (12) auszubilden, wobei das Leitungsdach (12) bevorzugt dem Leitungsboden (10) gegenüberliegend ausgebildet ist,
**dadurch gekennzeichnet, dass**
die Längsachse (L) der Anschlussabschnitte (20, 22) von der Längsachse (LF) des Faltenbalgs (30) beabstandet ist.

2. Leitungskompensator (1) gemäß Anspruch 1, **dadurch gekennzeichnet, dass** die Falten (32) des Faltenbalgs (30) im Bereich der Materialverstärkungen (36) auf der Außenseite zur Ausbildung von Abflachungen (320) abgeflacht sind.

3. Leitungskompensator (1) gemäß einem der vorstehenden Ansprüche, **dadurch gekennzeichnet, dass** die Falten (32) des Faltenbalgs (30) in einer Seitenwand (14) materialverstärkungsfrei ausgebildet sind.

4. Leitungskompensator (1) gemäß einem der vorstehenden Ansprüche, **dadurch gekennzeichnet, dass** der erste Anschlussabschnitt (20) und/oder der zweite Leitungsabschnitt (22) einen Innendurchmesser (D1) aufweist, welcher kleiner ist, als der Innendurchmesser (D2) des Faltenbalgs (30).

5. Leitungskompensator (1) gemäß einem der vorstehenden Ansprüche, **dadurch gekennzeichnet, dass** der erste Anschlussabschnitt (20) und der zweite Anschlussabschnitt (22) konzentrisch zueinander angeordnet sind.

6. Leitungskompensator (1) gemäß einem der vorstehenden Ansprüche, **dadurch gekennzeichnet, dass** die Längsachse (L) der Anschlussabschnitte (20, 22) von der Längsachse (LF) des Faltenbalgs (30) um die Differenz (D2-D1) des Innendurchmessers (D2) des Faltenbalgs (30) und des Innendurchmessers (D1) der Anschlussabschnitte (20, 22) beabstandet ist.

7. Leitungskompensator (1) gemäß einem der vorstehenden Ansprüche, **dadurch gekennzeichnet, dass** ein Leitungsboden (10) von einem Anbindungsabschnitt (20) durch den Faltenbalg (30) hindurch zu dem weiteren Anbindungsabschnitt (22) durchgehend eben ausgebildet ist.

8. Leitungskompensator (1) gemäß einem der vorstehenden Ansprüche, **dadurch gekennzeichnet, dass** der Leitungsboden (10) in der Längsrichtung (L) betrachtet eine V-Form aufweist.

9. Leitungskompensator (1) gemäß einem der vorstehenden Ansprüche, **dadurch gekennzeichnet, dass** die Anschlussabschnitte (20, 22) mit dem Faltenbalg (30) und den Materialverstärkungen (36) einstückig ausgebildet sind.

10. Leitungskompensator (1) gemäß einem der vorstehenden Ansprüche, **dadurch gekennzeichnet, dass** mindestens ein Anschlussabschnitt (22) einen Flansch (24) aufweist.

11. Leitungskompensator (1) gemäß einem der vorstehenden Ansprüche, **dadurch gekennzeichnet, dass** mindestens ein Anschlussabschnitt (20) eine Clampverbindung oder eine Klemmverbindung aufweist und/oder dass mindestens ein Anschlussabschnitt (20) an ein Leitungsende anschweißbar ist.

12. Leitungskompensator (1) gemäß einem der vorstehenden Ansprüche, **dadurch gekennzeichnet, dass** in dem Faltenbalg (30) und/oder im Bereich eines der Anschlussabschnitte (20, 22) ein Gleichrichter zum Bereitstellen einer laminaren Strömung vorgesehen ist, wobei der Gleichrichter bevorzugt Form einer Lochscheibe und/oder einer Spirale vorgesehen ist.

13. Leitungskompensator (1) gemäß einem der vorstehenden Ansprüche, **dadurch gekennzeichnet, dass** der Faltenbalg (30) in einer in Einbaulage horizontalen Ebene eine geringere Biegesteifigkeit aufweist, als in einer vertikalen Ebene.

## Claims

1. Pipe compensator (1) for connecting two pipe ends, preferably in a beverage filling plant, comprising a first connecting portion (20), a second connecting portion (22) and a bellows (30) situated between the first connecting portion (20) and the second connecting portion (22), wherein the bellows (30) is designed to be drainable, in that the folds (32) of the bellows (30) are filled with material reinforcements (36) in the region of a pipe base (10), in order to form a flat pipe base (10), and/or the folds (32) of the bellows (30) are filled in the region of a pipe roof (12) with material reinforcements (36) in order to form a pipe roof (12), wherein the pipe roof (12) is preferably formed to be situated opposite to the pipe base (10),
**characterised in that**
the longitudinal axis (L) of the connection portions (20, 22) is spaced from the longitudinal axis (LF) of the bellows (30).

2. Pipe compensator (1) according to claim 1, **characterised in that** the folds (32) of the bellows (30) in the region of the material reinforcements (36) are flatted on the outer side to form flattenings (320)

3. Pipe compensator (1) according to any of the preceding claims, **characterised in that** the folds (32) of the bellows (30) are formed in a side wall (14) free of material reinforcement.

4. Pipe compensator (1) according to any of the preceding claims, **characterised in that** the first connecting portion (20) and/or the second connecting portion (22) has an inner diameter (D1) which is smaller than the inner diameter (D2) of the bellows (30).

5. Pipe compensator (1) according to any of the preceding claims, **characterised in that** the first connecting portion (20) and the second connecting portion (22) are arranged concentrically to one another.

6. Pipe compensator (1) according to any of the preceding claims, **characterised in that** the longitudinal axis (L) of the connecting portions (20, 22) is spaced from the longitudinal axis (LF) of the bellows (30) by the difference (D2-D1) between the inner diameter (D2) of the bellows (30) and the inner diameter (D1) of the connecting portions (20, 22).

7. Pipe compensator (1) according to any of the preceding claims, **characterised in that** a pipe base (10) is formed to be continuously flat from a connecting portion (20) through the bellows (30) to the further connecting portion (22).

8. Pipe compensator (1) according to any of the preceding claims, **characterised in that** the pipe base (10) has a V shape when viewed in longitudinal direction (L).

9. Pipe compensator (1) according to any of the preceding claims, **characterised in that** the connecting portions (20, 22) are formed integrally with the bellows (30) and the material reinforcements (36).

10. Pipe compensator (1) according to any of the preceding claims, **characterised in that** at least one connecting portion (22) has a flange (24).

11. Pipe compensator (1) according to any of the preceding claims, **characterised in that** at least one connecting portion (20) has a clamp connection or clamping connection and/or that at least one connecting portion (20) can be welded to a pipe end.

12. Pipe compensator (1) according to any of the preceding claims, **characterised in that** in the bellows (30) and/or in the region of one of the connecting portions (20, 22) is provided a rectifier for providing a laminar flow, wherein the rectifier is preferably provided in the form of a breaker plate and/or a spiral.

13. Pipe compensator (1) according to any of the preceding claims, **characterised in that** the bellows (30) has a lower flexural rigidity in a plane which is horizontal in the installed position, than in a vertical plane.

## Revendications

1. Compensateur de conduite (1) pour relier deux extrémités de conduite, de préférence dans une installation de remplissage de boissons, comprenant une première section de raccordement (20), une seconde section de raccordement (22) et un soufflet (30) se trouvant entre la première section de raccordement (20) et la seconde section de raccordement (22), dans lequel le soufflet (30) est conçu pour fonctionner à vide, les plis (32) du soufflet (30) étant remplis dans la zone d'un fond de conduite (10) avec des renforcements de matériaux (36), pour former un fond de conduite (10) plat, et/ou les plis (32) du soufflet (30) sont remplis dans la zone d'un toit de conduite (12) avec des renforcements de matériaux (36), pour former un toit de conduite (12) plat, dans lequel le toit de conduite (12) est conçu de préférence à l'opposé du fond de conduite (10),
**caractérisé en ce que**
l'axe longitudinal (L) des sections de raccordement (20, 22) est éloigné de l'axe longitudinal (LF) du soufflet (30).

2. Compensateur de conduite (1) selon la revendication 1, **caractérisé en ce que** les plis (32) du soufflet (30) sont aplatis dans la zone des renforcements de matériaux (36) sur le côté externe pour la formation de parties aplaties (320).

3. Compensateur de conduite (1) selon l'une quelconque des revendications précédentes, **caractérisé en ce que** les plis (32) du soufflet (30) sont conçus dans une paroi latérale (14) exempt de renforcements de matériaux.

4. Compensateur de conduite (1) selon l'une quelconque des revendications précédentes, **caractérisé en ce que** la première section de raccordement (20) et/ou la seconde section de raccordement (22) présente(-ent) un diamètre intérieur (D1), lequel est inférieur au diamètre intérieur (D2) du soufflet (30).

5. Compensateur de conduite (1) selon l'une quelconque des revendications précédentes, **caractérisé en ce que** la première section de raccordement (20) et la seconde section de raccordement (22) sont disposés de manière concentrique l'une par rapport à l'autre.

6. Compensateur de conduite (1) selon l'une quelconque des revendications précédentes, **caractérisé en ce que** l'axe longitudinal (L) des sections de raccordement (20, 22) est éloigné de l'axe longitudinal (LF) du soufflet (30) de la différence (D2-D1) entre le diamètre intérieur (D2) du soufflet (30) et le diamètre intérieur (D1) des sections de raccordement (20, 22).

7. Compensateur de conduite (1) selon l'une quelconque des revendications précédentes, **caractérisé en ce qu'**un fond de conduite (10) est conçu continuellement de manière plate d'une section de raccordement (20) à travers le soufflet (30) jusqu'à l'autre section de raccordement (22).

8. Compensateur de conduite (1) selon l'une quelconque des revendications précédentes, **caractérisé en ce que** le fond de conduite (10) présente une forme en V vu dans la direction longitudinale (L).

9. Compensateur de conduite (1) selon l'une quelconque des revendications précédentes, **caractérisé en ce que** les sections de raccordement (20, 22) sont conçues d'un seul tenant avec le soufflet (30) et les renforcements de matériaux (36).

10. Compensateur de conduite (1) selon l'une quelconque des revendications précédentes, **caractérisé en ce qu'**au moins une section de raccordement (22) présente une bride (24).

11. Compensateur de conduite (1) selon l'une quelconque des revendications précédentes, **caractérisé en ce qu'**au moins une section de raccordement (20) présente une liaison par pince ou une liaison par serrage et/ou **en ce qu'**au moins une section de raccordement (20) peut être soudée à une extrémité de conduite.

12. Compensateur de conduite (1) selon l'une quelconque des revendications précédentes, **caractérisé en ce que** dans le soufflet (30) et/ou dans la zone de l'une des sections de raccordement (20, 22) est prévu(e) un redresseur pour fournir un écoulement laminaire, dans lequel le redresseur est prévu de préférence sous la forme d'un disque perforé et/ou d'une spirale.

13. Compensateur de conduite (1) selon l'une quelconque des revendications précédentes, **caractérisé en ce que** le soufflet (30) présente dans un plan horizontal en position de montage une rigidité à la flexion plus faible que dans un plan vertical.
